# EUROPÄISCHE PATENTSCHRIFT

(11) **EP 1 905 292 B1**
(45) Veröffentlichungstag und Bekanntmachung des Hinweises auf die Patenterteilung: **05.09.2012**
(21) Anmeldenummer: 07111435.9
(22) Anmeldetag: 29.06.2007
(51) Int. Cl.: A01D 43/08

(54) **Messvorrichtung zur Messung von Parametern**
Measuring device for measuring parameters
Dispositif de mesure destiné à la mesure de paramètres

(30) Priorität: 28.09.2006 DE 102006046340; 24.10.2006 DE 102006050663
(43) Veröffentlichungstag der Anmeldung: 02.04.2008
(73) Patentinhaber: CLAAS Selbstfahrende Erntemaschinen GmbH, 33428 Harsewinkel (DE)
(72) Erfinder: Quincke, Gunnar, 59494, Soest (DE)

(56) Entgegenhaltungen:
- EP-A- 0 931 446
- EP-A- 1 825 740
- WO-A-99/46971
- DE-A1- 19 648 126

## Beschreibung

Die Erfindung betrifft eine Messvorrichtung zur Messung von Parametern in einer landwirtschaftlichen Arbeitsmaschine nach dem Oberbegriff des Anspruchs 1.

Eine gattungsgemäße Vorrichtung ist u.a. aus der DE 196 48 126 bekannt geworden. Die dort offenbarte landwirtschaftliche Arbeitsmaschine ist als Feldhäcksler ausgeführt und nimmt in ihrem zur Überladung des Erntegutes auf ein Transportfahrzeug vorgesehenen Auswurfkrümmer eine Mikrowellensensoreinrichtung auf. Der Mikrowellensensor detektiert den durch den Auswurfkrümmer geförderten Erntegutstrom und ermittelt in Verbindung mit einer Auswertelektronik förder- und/oder erntegutspezifische Parameter, wobei hier insbesondere die Gutfeuchte und die Gutdichte sensiert werden können. Weitere, an verschiedenen Stellen des Feldhäckslers angeordnete Sensoren liefern Informationen über weitere Parameter des den Feldhäcksler durchlaufenden Gutstromes. Die Auswertelektronik bestimmt dann unter anderem aus den ermittelten Sensorwerten einen den Feldhäcksler durchlaufenden Erntegutdurchsatz. Ein derartig strukturiertes Messverfahren hat insbesondere den Nachteil, dass eine auf den Querschnitt des Auswurfkrümmers, welche den Bereich der Gutfeuchteermittlung repräsentiert, bezogene Ermittlung des Erntegutdurchsatzes nicht möglich ist. Wird andererseits das Volumen des den Feldhäcksler durchlaufenden Gutstromes nicht an der Stelle ermittelt, an der auch die Gutfeuchte sensiert wird, beziehen sich die ermittelten Werte nicht auf ein und denselben Abschnitt des Gutstromes, sodass eine präzise Ermittlung eines Gutdurchsatzes aus diesen Parametern nicht möglich ist, da eine präzise Dichtebestimmung ein und desselben Gutstromabschnitts mit einer derartigen Messeinrichtung nicht möglich ist.

Dem Abhilfe schaffend ist aus der DE 103 06 725 eine Messeinrichtung bekannt geworden, bei der aus dem den Feldhäcksler durchlaufenden Gutstrom eine Erntegutmenge entnommen und einer separaten Messeinrichtung zugeführt wird. In dieser separaten Messeinrichtung wird die Erntegutprobe einer definierten Vorverdichtung ausgesetzt. Dies führt zu einer homogenen Struktur der Erntegutprobe, sodass schließlich diverse Gutparameter dieser Erntegutprobe mit einer relative hohen Genauigkeit bestimmbar sind. Wegen der erheblich verbesserten Struktur der zu sensierenden Erntegutprobe haben auch die ermittelten Erntegutparameter eine höhere Genauigkeit, sodass schließlich eine präzisere Erntegutdichte und letztlich ein genauerer Erntegutdurchsatz ermittelbar sind. Nachteilig an einer derartig ausgeführten Messeinrichtung ist einerseits die aufwendige Gestaltung der Messvorrichtung selbst sowie der Umstand, dass zusätzliche Förderelemente erforderlich sind, die die Entnahme der Erntegutprobe aus dem Erntegutstrom und die Rückführung der Erntegutprobe aus der Messvorrichtung in den Erntegutstrom realisieren. Zudem wird auch bei dieser Ausführung die Gutfeuchte und ein durchsatzproportionales Signal an unterschiedlichen Stellen des Erntegutstromes sensiert.

Aus der EP 1 825 740 A1 ist eine Messvorrichtung bekannt, mit der sich die Verdichtungseigenschaften von Erntegut ermitteln lassen. Unter anderem kann in einer Verdichtungseinrichtung die Gutfeuchte bestimmt werden und kann mittels eines Spaltsensors der Erntegutdurchsatz ermittelt werden. Die Sensoreinrichtungen sind jeweils an unterschiedlichen Stellen in der Maschine positioniert und detektieren verschiedene Abschnitte des Erntegutstrangs. Auch hier werden Teilmengen des Ernteguts zum Zweck der Verdichtung aus dem Emtegutstrang entnommen.

Es ist eine Aufgabe der vorliegenden Erfindung eine Messvorrichtung anzugeben, welche genauere Daten über den die landwirtschaftliche Arbeitsmaschine durchlaufenden Erntegutstrom bereitstellt.

Diese Aufgabe wird erfindungsgemäß durch die kennzeichnenden Merkmale des Anspruchs 1 gelöst.

Indem die Messvorrichtung zur Messung von Parametern in einer landwirtschaftlichen Arbeitsmaschine zur Aufnahme und Behandlung von Erntegut, bestehend aus einem Rahmen, einem Fahrwerk, einem Aufnahmevorsatz, zumindest einer Behandlungseinrichtung zur Behandlung des Erntegutes eingerichtet ist, den Parameter "Erntegutdurchsatz" zumindest eines Teilstromes des die landwirtschaftliche Arbeitsmaschine durchlaufenden Erntegutstroms erntegutdichtekompensiert zu ermitteln, wird sichergestellt, dass genauere Daten über den die landwirtschaftliche Arbeitsmaschine durchlaufenden Erntegutstrom bereitstellbar sind, da die Erntegutdichte einen maßgeblichen Einfluss auf die Ermittlung eines Erntegutdurchsatzes hat und häufig wegen ihrer großen Streuung innerhalb eines Gutstranges zu einer erheblichen Verfälschung des ermittelten Erntegutdurchsatzes führt.

Erfindungsgemäß wird die Kompensation der Erntegutdichte des Erntegutstromes durch Ermittlung des Volumens des zumindest einen Teilstromes des die landwirtschaftliche Arbeitsmaschine durchlaufenden Erntegutstromes und der Ermittlung der Feuchtigkeit dieses Teilstromes bewirkt. Dies hat insbesondere den Vorteil, dass vor allem der enorme Einfluss der Feuchtigkeit des Erntegutes auf dessen Dichte und Volumen sowie den sich hieraus ergebenden Erntegutdurchsatz sehr gut berücksichtigt wird, was letztlich zu einer erheblich genaueren Bestimmung des Erntegutdurchsatzes führt.

Damit nun der Dichteeinfluss auf die Ermittlung des Erntegutdurchsatzes nahezu kompensiert ist, wird in einer weiteren vorteilhaften Ausgestaltung der Erfindung vorgeschlagen, dass das Gutvolumen des zumindest einen Teilstromes und die Gutfeuchtigkeit und/oder die Erntegutdichte diese Teilstromes in demselben Bereich des Gutstrangausschnitts ermittelt wird.

Eine konstruktiv besonders einfach strukturierte Messeinrichtung ergibt sich dann, wenn in einer vorteilhaften Ausgestaltung der Erfindung das Gutvolumen und die Gutfeuchtigkeit des zumindest einen Teilstromes durch Sensiereinrichtungen ermittelt werden, deren Sensierbereiche von dem Förderweg des zumindest einen Teilstromes durchsetzt werden.

Eine einfache und technisch bewährte Ermittlung des Gutvolumens kann dadurch sichergestellt werden, dass in einer vorteilhaften Weiterbildung der Erfindung das Gutvolumen des zumindest einen Teilstromes von den Teilstrom abtastenden und in Abhängigkeit von der Erntegutmenge auslenkbaren Kontaktelementen ermittelt wird.

In einer einfachen Ausgestaltung der Messvorrichtung kann die Gutfeuchte des zumindest einen Teilstromes mittels von Sensoren ausgesendeten elektromagnetischen Wellen detektiert wird. Eine vielfach bewährte technische Umsetzung ergibt sich in diesem Zusammenhang, wenn der die elektromagnetischen Wellen generierende Sensor als Mikrowellensensor ausgebildet ist.

In einer vorteilhaften Ausgestaltung der Erfindung ist der Mikrowellensensor eingerichtet in dem zumindest einen Teilstrom und in dem selben Bereich des Erntegutstranges die in dem Teilstrom enthaltene Wassermasse und die Dichte dieses Teilstromes zu ermitteln. Eine solche Ausführung hat insbesondere den Vorteil, dass mittels eines einzigen Sensors in dem Messbereich die wesentlichen Parameter des Erntegutstromes, nämlich die Gutfeuchte und die abhängig von der Gutfeuchte stark schwankende Erntegutdichte ermittelbar sind. Indem die Informationen bezüglich der Erntegutdichte und des Wasseranteils in dem sensierten Erntegutstrang unmittelbar von ein und demselben Bündel von Mikrowellen ermittelt werden, wird die Möglichkeit geschaffen, dass der Mikrowellensensor eine erntegutdichteunabhängige Ermittlung der Erntegutfeuchte oder eine erntegutfeuchtekompensierte Erntegutdichteermittlung ermöglicht.

In einer vorteilhaften Ausgestaltung der Erfindung ist die landwirtschaftliche Arbeitsmaschine als Feldhäcksler ausgeführt, die in ihrem fronseitigen Bereich als Vorpresswalzen ausgeführte Einzugsorgane aufweist und wobei zumindest ein Einzugsorgan als in vertikaler Richtung verschwenkbares Kontaktelement ausgebildet ist dem eine Sensiereinrichtung zur Ermittlung eines Positionssignals dieses Kontaktelementes zugeordnet ist. Indem schließlich aus dem oder den generierten Positionssignalen in einer Auswerteinheit ein Volumen des die Einzugsorgane durchlaufenden Erntegutstromes ermittelt wird, steht nahezu online der Erntegutparameter Gutvolumen zur Verfügung.

In einer weiteren vorteilhaften Ausgestaltung ist die landwirtschaftliche Arbeitsmaschine als Feldhäcksler ausgeführt, die in ihrem fronseitigen Bereich als Vorpresswalzen ausgeführte Einzugsorgane aufweist und wobei zumindest einem Einzugsorgan ein elektromagnetische Wellen generierender Sensor zur Ermittlung eines Gutparametersignals des die Einzugsorgane durchlaufenden Erntegutstromes ermittelt. Indem aus dem oder den generierten Gutparametersignalen in einer Auswerteinheit eine Gutfeuchte des die Einzugsorgane durchlaufenden Erntegutstromes ermittelt wird, bestimmt die Auswerteinheit auf einfache Weise den weiteren zur Ermittlung einer genauen Gutdichte erforderlichen erntegutspezifischen Parameter.

Indem schließlich die ermittelte Gutfeuchte des zumindest einen Teilstromes bei der Ermittlung des Parameters Erntegutdurchsatz des Teilstromes aus dem ermittelten Parameter Gutvolumen des Teilstromes berücksichtigt wird, wird sichergestellt, dass ein sehr genauer Gutdurchsatzwert ermittelbar ist, da die negativen Einflüsse des Ermittelns von Erntegutparametern an verschiedenen Stellen des Erntegutflusses und bei unterschiedlichen Gutdichtewerten nahezu kompensiert werden.

In einer vorteilhaften Weiterbildung der Erfindung wird die erfindungsgemäße Messvorrichtung zur Messung von Erntegutparametern in einer als Mähdrescher ausgeführt landwirtschaftlichen Arbeitsmaschine eingesetzt und wobei die Messvorrichtung den Parameter "Erntegutgesamtdurchsatz" und/oder "Korndurchsatz" ermittelt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Feldhäcksler ausgeführte landwirtschaftliche Arbeitsmaschine mit erfindungsgemäßer Messvorrichtung in Seitenansicht
- Figur 2: ein Detail des Feldhäckslers nach Fig. 1 in Seitenansicht
- Figur 3: eine Detaildarstellung einer als Mähdrescher ausgeführten landwirtschaftlichen Arbeitsmaschine mit erfindungsgemäßer Messvorrichtung in Seitenansicht

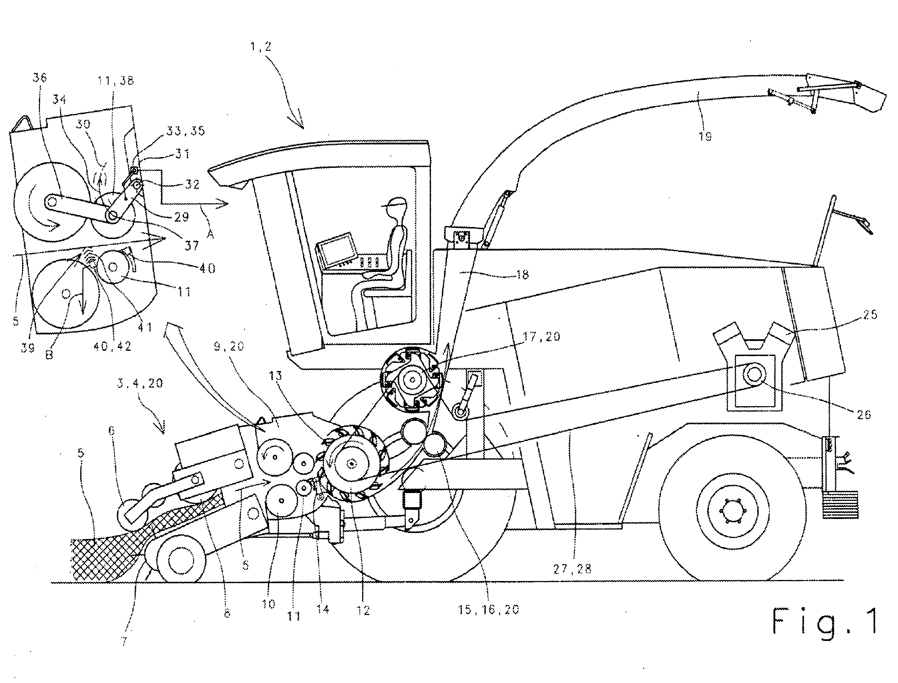

Fig. 1 zeigt eine als Feldhäcksler 2 ausgeführte landwirtschaftliche Arbeitsmaschine 1, die in ihrem frontseitigen Bereich ein als Pick-up 4 ausgeführtes Vorsatzgerät 3 aufnimmt. Die Pick-up 4 ist so gestaltet, dass sie einen Erntegutstrang 5 zwischen einer Niederhaltereinrichtung 6 und einer Aufsammeltrommel 7 aufnimmt und im rückwärtigen Bereich der Pick-up 4 einer Querförderschnecke 8 zuführt. Die Querförderschnecke 8 übergibt das Erntegut 5 nahezu mittig der Pick-up 4 nachgeordneten Einzugsorganen 9. Im dargestellten Ausführungsbeispiel werden die Einzugsorgane 9 von paarweise angeordneten Einzugswalzen 10 und diesen nachgeordneten Vorpresswalzen 11 gebildet. Nachdem der Erntegutstrang 5 die Einzugsorgane 9 passiert hat, wird er in deren rückwärtigen Bereich an eine Häckseltrommel 12 übergeben. Die Häckseltrommel 12 nimmt an ihrem Umfang eine Vielzahl von Häckselmessern 13 auf, die den Erntegutstrang 5 im Zusammenwirken mit einer Gegenschneide 14 zerkleinert. Durch die kinetische Energie der umlaufenden Häckseltrommel 12 tritt der Erntegutstrang 5 im rückwärtigen Bereich der Häckseltrommel 12 mit hoher Geschwindigkeit aus dieser aus und wird an paarweise angeordnete Crackerwalzen 15 übergeben. Die Crackerwalzen 15 bilden dabei eine sogenannte Nachzerkleinerungseinrichtung 16. Nachdem der Erntegutstrang 5 die Nachzerkleinerungseinrichtung 16 passiert hat, gelangt er in den Wirkbereich eines Nachbeschleunigers 17. Der Nachbeschleuniger 17 prägt dem Erntegutstrang 5 in an sich bekannter Weise zusätzliche kinetische Energie auf, mittels derer der Erntegutstrang 5 über einen in vertikaler Richtung weisenden Auswurfschacht 18 und einen diesem nachgeordneten schwenk- und drehbeweglichen Auswurfkrümmer 19 aus dem Feldhäcksler 2 herausgefördert wird. Im dargestellten Ausführungsbeispiel bilden das Vorsatzgerät 3, die Einzugsorgane 9, die Häckseltrommel 12, die Nachzerkleinerungseinrichtung 16, sowie der Nachbeschleuniger 17 die erfindungsgemäßen Arbeitsorgane 20 der landwirtschaftlichen Arbeitsmaschine 1.

Weiter ist dem Feldhäcksler 2 zumindest ein Antriebsmotor 25 zugeordnet, dessen abtriebsseitige Riemenscheibe 26 von einem Antriebsriemen 27 umschlungen wird. Der Antriebsriemen 27 bildet in an sich bekannter Weise einen Hauptantriebsriemen 28 zum Antrieb der verschiedenen zuvor beschrieben Arbeitsorgane 20 des Feldhäckslers 2.

In dem dargestellten Ausführungsbeispiel wird zumindest die obere der Vorpresswalzen 11 über eine Winkelhebelstruktur 29 schwenkbeweglich geführt. In Abhängigkeit von dem Volumen des durch die Einzugsorgane 9 hindurchtretenden Erntegutstromes 5 bewegt sich die verschwenkbare Vorpresswalze 11 auf einer Kurvenbahn 30 um eine am Chassis 31 des Feldhäckslers 2 befestigte Schwenkachse 32. Indem zumindest der Schwenkachse 32 der höhenbeweglichen Vorpresswalze 11 eine Sensiereinrichtung 33 zur Ermittlung der Auslenkung 34 dieser Vorpresswalze 11 zugeordent ist, kann mittels der Sensiereinrichtung 33 in erfindungsgemäßer Weise ein Positionssignal A der Vorpresswalze 11 ermittelt werden. Das Positionssignal A ist damit zugleich ein Maß für die Menge des zwischen den Vorpresswalzen 11 hindurchgeförderten Erntegutstromes 5. Im einfachsten Fall kann die Sensiereinrichtung 33 als an sich bekanntes Drehpotentiometer 35 ausgeführt sein, dessen auslenkungsabhängigen Spannungssignale dem Positionssignal A entsprechen. Es liegt im Rahmen der Erfindung, dass die obere Einzugswalze 10 über eine Koppelsteganordnung 36 mit der oberen Vorpresswalze 11 schwenkbeweglich verbunden sein kann und die erfindungsgemäße Sensiereinrichtung 33 der Schwenkachse 37 der oberen Einzugswalze 10 zugeordnet ist, sodass dann aus dem Verschwenken der oberen Einzugswalze 10 in der beschriebenen Weise das Positionssignal A abgeleitet wird. Es liegt auch im Rahmen der Erfindung, dass jedes der Einzugsorgane 8 schwenkbeweglich im Chassis 31 des Feldhäckslers 2 gelagert sein kann und einer oder allen Einzugsorganen 8 die beschriebene Sensiereinrichtung 33 zugeordnet sein kann.

Indem die Einzugswalzen 10 als auch die Vorpresswalzen 11 unmittelbar Kontakt zu dem die Einzugsorgane 8 durchlaufenden Gutstrang 5 haben und diesen fördern und vorverdichten bildet zumindest die verschwenkbar angeordnete obere Vorpresswalze 11 eines der erfindungsgemäßen Kontaktelemente 38 zur Detektion des Volumens des die Einzugsorgane durchlaufenden Erntegutstromes 5, wobei dieser zugleich den erfindungsgemäßen Teilstrom 39 bildet.

Weiter ist im Bereich der Einzugsorgane 8 unterhalb des die Einzugsorgane 8 durchlaufenden Erntegutstromes 5 zumindest ein als Mikrowellensensor 40 ausgeführter, elektrische Wellen 41 in den Teilstrom 39 sendender Sensor 42 angeordnet. In an sich bekannter und in der DE 196 48 126, deren Offenbarung vollumfänglich Bestandteil dieser Beschreibung sein soll, näher beschriebenen Weise kann der Mikrowellensensor 40 aus den Refelexionssignalen der ausgesendeten elektrischen Wellen 41 über die Detektion der Amplitude, Frequenz und Phasenverschiebung der ankommenden Wellen im Vergleich zu den ausgesendeten Wellen 41 zumindest ein feuchteproportionales Gutparametersignal B generieren. Es liegt im Rahmen der Erfindung, dass im Bereich der Einzugsorgane 8 ein Vielzahl derartiger Mikrowellensensoren 40 angeordnet sein können, die ebenfalls feuchteproportionale Gutparametersignale B generieren. Zugleich können die Gutparametersignale auch zur Ableitung verschiedenere weiterer Gutparameter, wie etwa die Zusammensetzung des Erntegutstromes 5, herangezogen werden. Außerdem ist es denkbar, dass der oder die Mikrowellensensoren 40 gemeinsam mit der Sensiereinrichtung 33 zur Ermittlung des Volumens des Erntegutstromes 5 an einer anderen Stelle des Feldhäckslers 2 angeordnet sind, um zumindest einen Teilstrom 39 des den Feldhäcksler 2 durchlaufenden Erntegutstromes 5 zu detektieren.

Nach einer Ausgestaltung der Erfindung kann der Mikrowellensensor 40 auch so beschaffen sein, dass die von ihm ausgesendeten Mikrowellen 41 in dem zumindest einen Teilstrom 39 und in dem selben Bereich des Erntegutstranges 5 die in dem Teilstrom 39 enthaltene Wassermasse und die Dichte dieses Teilstromes 39. Nach dem Stand der Technik können diese Informationen aus den reflektierten Mikrowellen 41 in der Weise abgeleitet werden, dass der Wasseranteil proportional zur Abnahme der Energie der reflektierten Mikrowellen 41 im Verhältnis zur Energie der ausgesendeten Mikrowellen 41 ist. Durch Hinzuziehung entsprechender Kennlinien kann aus der Energiereduzierung auf den Wasseranteil in dem sensierten Teilstrom 39 geschlossen werden. Zugleich wird werden die Ausbreitungsgeschwindigkeiten der ausgesendeten Mikrowellen 41 und der reflektierten Mikrowellen 41 ermittelt, wobei sich aus der Abnahme der Ausbreitungsgeschwindigkeit ein Dämpfungsmaß ergibt aus dem unter Hinzuziehung hinterlegter Kennlinien eine Erntegutdichte abgeleitete werden kann. Indem die Informationen bezüglich der Erntegutdichte und des Wasseranteils in dem sensierten Erntegutstrang 39 unmittelbar von ein und demselben Bündel von Mikrowellen 41 ermittelt werden, wird die Möglichkeit geschaffen, dass der Mikrowellensensor 40 eine erntegutdichteunabhängige Ermittlung der Erntegutfeuchte oder eine erntegutfeuchtekompensierte Erntegutdichteermittlung ermöglicht.

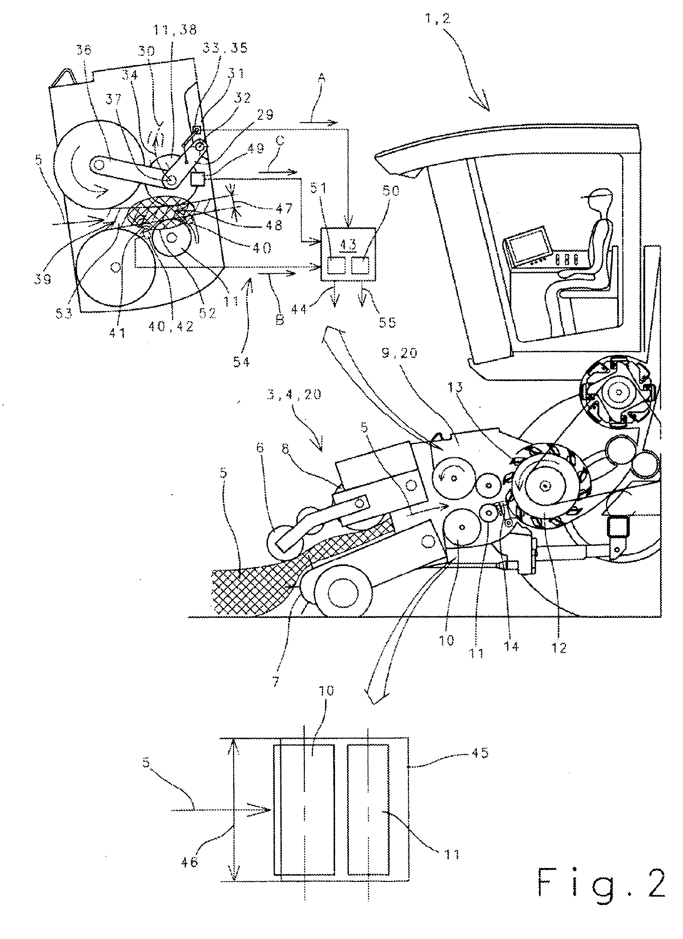

Gemäß Fig. 2 werden die von der Sensiereinrichtung 33 und dem oder den Mikrowellensensoren generierten Positionssignale A und Gutparametersignale B an eine Auswerteinheit 43 übergeben. In der Auswerteinheit 43 sind in an sich bekannter Weise zunächst die für die Bestimmung eines Gutvolumens 44 erforderlichen Abmessungen des Bereiches der landwirtschaftlichen Arbeitsmaschine 1 hinterlegt, in dem die Positionssignale A generiert wurden. Im dargestellten Ausführungsbeispiel heißt dies, dass zunächst die Breite 46 des Einzugskanals 45 hinterlegt ist. Zudem ist in der Auswerteinheit 43 zumindest eine Kennlinie hinterlegt, die aus dem ermittelten Positionssignal A der schwenkbeweglichen oberen Vorpresswalze 11 eine Höhe 47 des Durchzugsspaltes 48 zwischen den paarweise angeordneten Vorpresswalzen 11 ableitet. Indem nun zumindest der oberen Einzugswalze 11 ein Drehzahlsensor 49 zugeordnet ist, der ein Drehzahlsignal C an die Auswerteinheit übergibt, kann zugleich die Geschwindigkeit des sensierten Teilstromes 39 im Bereich der Einzugsorgane 8 in an sich bekannter Weise ermittelt werden. Aus dem Querschnitt des Teilstromes 39 und seiner Fördergeschwindigkeit ergibt sich schließlich das Gutvolumen 44 des Teilstromes 39.

Weiter sind in der Auswerteinheit 43 verschiedene Erntegutdichtewerte 50 insbesondere in Abhängigkeit verschiedener Gutfeuchtewerte 51 hinterlegt. Denkbar ist es aber auch die Erntegutdichte 50 in Abhängigkeit von weiteren oder anderen Erntegutparametern zu hinterlegen. Während die Gutfeuchte 51 einen sehr starken Einfluss auf die Erntegutdichte 50 hat und mit zunehmender Gutfeuchtigkeit zu einem erheblichen Anstieg der Erntegutdichte 50 führt, kann beispielsweise auch die durchschnittliche Teilchengröße des Erntegutstromes 5 herangezogen werden. Dieser Erntegutparameter ist insbesondere deshalb von Bedeutung, da Lufteinschlüsse mit sinkender Teilchengröße erheblich abnehmen was letztlich zu einer ansteigenden Erntegutdichte 50 führt. Indem nun in erfindungsgemäßer Weise sowohl das Positionssignal A als auch das Gutparametersignal B in dem selben Bereich 52 ermittelt wurden, beziehen sich die in der Auswerteinheit 43 hieraus abgeleiteten Erntegutparameter Gutvolumen 44 und Gutfeuchte 51 auf den selben Teilstrom 39 des Erntegutstrangs 5. Dies hat den Vorteil, dass beide Werte unmittelbar die Guteigenschaften ein und desselben Gutstrangausschnitts 53 beschreiben. Damit wird es möglich aus den hinterlegten Erntegutdichtewerten 50 einen Erntegutdichtewert 50 bezogen auf die ermittelte Gutfeuchte 51 auszuwählen, der unmittelbar auch in dem zur Volumenbestimmung detektieren Gutstrangabschnitt gilt. Damit wird eine Messvorrichtung 54 geschaffen, die die verschiedenen Gutparameter bei ein und derselben Erntegutdichte 50 ermittelt, sodass sich der negative Einfluss unterschiedlicher Erntegutdichten 50 bei Detektion des Erntegutstranges 5 an verschiedenen Stellen nahezu vollständig kompensiert.

Indem in einem letzten Schritt in der Auswerteinheit 43 der gewählte Erntegutdichtewert 50 mit dem ermittelten Gutvolumen 44 in an sich bekannter Weise verrechnet wird ergibt sich schließlich ein erntegutdichtekompensierter Erntegutdurchsatz 55.

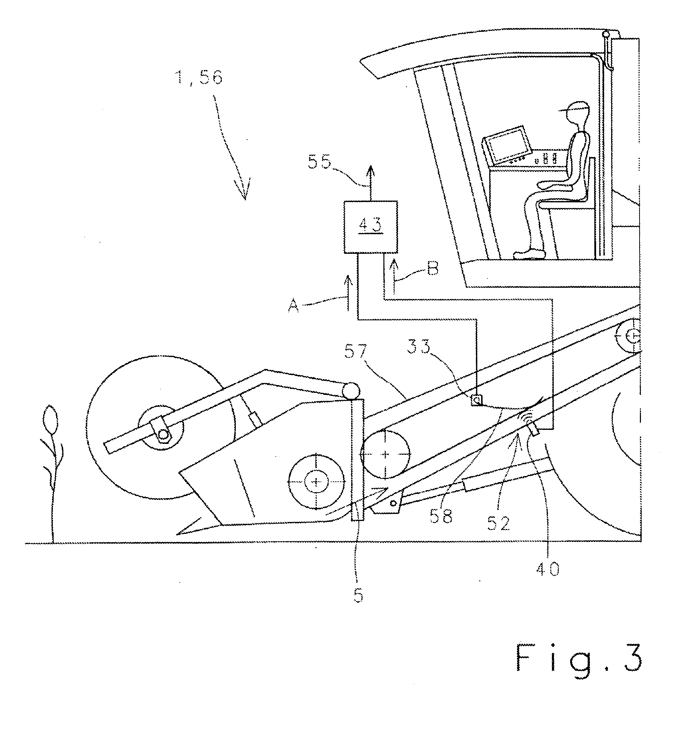

Weiter kann die landwirtschaftliche Arbeitsmaschine 1 gemäß Fig. 3 auch als so genannter Mähdrescher 56 ausgeführt sein, der in seinem frontseitig angeordneten Schrägförderkanal 57 die erfindungsgemäße Sensiereinrichtung 33 aufnimmt. Die Sensiereinrichtung 33 ist in an sich bekannter Weise als Schwenkhebel 58 ausgeführt. Indem nun ein Erntegutstrang 5 von dem im Schrägförderkanal 57 angeordneten Schrägförderer 59 erfasst wird, wird dieser enstprechend der zu fördernden Erntegutmenge in vertikaler Richtung ausgelenkt. Diese Auslenkung wird von dem Schwenkhebel 58 erfasst, sodass diese Sensiereinrichtung 33 schließlich das Positionssignal A generiert. Weiter ist erfindungsgemäß in diesem Bereich 52 auch zumindest ein Mikrowellensensor 40 zur Generierung der Gutparametersignale B angeordnet. Schließlich wird in der oben beschriebenen Weise aus diesen Positionssignalen A und den zugehörigen Gutparametersignalen B ein erntegutdichtekompensierter Erntegutdurchsatz 55 in einer Auswerteinheit 43 ermittelt. In Bezug auf einen Mähdrescher 56 kann der Erntegutparameter Erntegutdurchsatz 55 entweder den Erntegutgesamtdurchsatz oder nur den Korndurchsatz betreffen. Letzteres wird dann möglich sein, wenn die Sensiereinrichtung 33 und der Mikrowellensensor 40 einem Körnerstrom des Mähderschers 56 zugeordnet sind.

Es liegt im Rahmen des Könnens eines Fachmanns die beschriebene Messvorrichtung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichen liste:

- 1: landwirtschaftliche Arbeitsmaschine
- 2: Feldhäcksler
- 3: Vorsatzgerät
- 4: Pick-up
- 5: Erntegutstrang
- 6: Niederhaltereinrichtung
- 7: Aufsammeltrommel
- 8: Querförderschnecke
- 9: Einzugsorgane
- 10: Einzugswalze
- 11: Vorpresswalze
- 12: Häckseltrommel
- 13: Häckselmesser
- 14: Gegenschneide
- 15: Crackerwalze
- 16: Nachzerkleinerungseinrichtung
- 17: Nachbeschleuniger
- 18: Auswurfschacht
- 19: Auswurfkrümmer
- 20: Arbeitsorgane
- 25: Antriebsmotor
- 26: Riemenscheibe
- 27: Antriebsriemen
- 28: Hauptantriebsriemen
- 29: Winkelhebelstruktur
- 30: Kurvenbahn
- 31: Chassis
- 32: Schwenkachse
- 33: Sensiereinrichtung
- 34: Auslenkung
- 35: Drehpotentiometer
- 36: Koppelstangenanordnung
- 37: Schwenkachse
- 38: Kontaktelement
- 39: Teilstrom
- 40: Mikrowellensensor
- 41: elektrische Welle
- 42: Sensor
- 43: Auswerteinheit
- 44: Gutvolumen
- 45: Einzugskanal
- 46: Breite
- 47: Höhe
- 48: Durchgangsspalt
- 49: Drehzahlsensor
- 50: Erntegutdichte
- 51: Gutfeuchte
- 52: Bereich
- 53: Gutstrangausschnitt
- 54: Messvorrichtung
- 55: Erntegutdurchsatz
- 56: Mähdrescher
- 57: Schrägförderkanal
- 58: Schwenkhebel
- 59: Schrägförderer

- A: Positionssignal
- B: Gutparametersignal
- C: Drehzahlsignal

## Patentansprüche

1. Messvorrichtung (54) zur Messung von Parametern in einer landwirtschaftlichen Arbeitsmaschine (1) zur Aufnahme und Behandlung von Erntegut, bestehend aus einem Rahmen, einem Fahrwerk, einem Aufnahmevorsatz (3,4), zumindest einer Behandlungseinrichtung (19, 12, 14) zur Behandlung des Erntegutes, Abgabevorrichtungen (17, 19, 20) und Antriebseinrichtungen (25, 26, 27, 28) zum Antrieb der einzelnen Maschinenkomponenten, **dadurch gekennzeichnet,**
**dass** die Messvorrichtung (54) eingerichtet ist, den Erntegutparameter Erntegutdurchsatz (55) zumindest eines Teilstromes (39, 53) des die landwirtschaftliche Arbeitsmaschine (1) durchlaufenden Erntegutstroms (5) emtegutdichtekompensiert zu ermitteln und
die Kompensation der Erntegutdichte (50) des Erntegutstromes (5, 39, 53)
durch Ermittlung des Gutvolumens des zumindest einen Teilstromes (39, 53) des die landwirtschaftliche Arbeitsmaschine (1) durchlaufenden Erntegutstromes (5) und der Ermittlung der Gutfeuchte (51) dieses Teilstromes (39, 53) bewirkt wird.

2. Messvorrichtung zur Messung von Parametern in einer landwirtschaftlichen Arbeitsmaschine nach Anspruch 1,
**dadurch gekennzeichnet,**
**dass** das Gutvolumen (44) des zumindest einen Teilstromes (39, 53) und die Gutfeuchte (51) und/oder die Erntegutdichte dieses Teilstromes (39, 53) in demselben Bereich des Erntegutstranges (5) ermittelt wird.

3. Messvorrichtung zur Messung von Parametern in einer landwirtschaftlichen Arbeitsmaschine nach einem der vorhergehenden Ansprüche,
**dadurch gekennzeichnet,**
**dass** das Gutvolumen (44) und die Gutfeuchte (51) des zumindest einen Teilstromes (39, 53) durch Sensiereinrichtungen (33, 42) ermittelt werden, deren Sensierbereiche (52) von dem Förderweg des zumindest einen Teilstromes (39, 53) durchsetzt werden.

4. Messvorrichtung zur Messung von Parametern in einer landwirtschaftlichen Arbeitsmaschine nach Anspruch 3,
**dadurch gekennzeichnet,**
**dass** das Gutvolumen (44) des zumindest einen Teilstromes (39, 53) von den Teilstrom (39, 53) abtastenden und in Abhängigkeit von dem Gutvolumen (44) auslenkbaren Kontaktelementen (38) ermittelt wird.

5. Messvorrichtung zur Messung von Parametern in einer landwirtschaftlichen Arbeitsmaschine nach Anspruch 3,
**dadurch gekennzeichnet,**
**dass** die Gutfeuchte (51) des zumindest einen Teilstromes (39, 53) mittels von Sensoren (42) ausgesendeten elektrischen Wellen (41) detektiert wird.

6. Messvorrichtung zur Messung von Parametern in einer landwirtschaftlichen Arbeitsmaschine nach Anspruch 5_{,}
**dadurch gekennzeichnet,**
**dass** der die elektrischen Wellen (41) generierende Sensor (42) als Mikrowellensensor (40) ausgebildet ist.

7. Messvorrichtung zur Messung von Parametern in einer landwirtschaftlichen Arbeitsmaschine nach Anspruch 6,
**dadurch gekennzeichnet,**
**dass** der Mikrowellensensor (40) eingerichtet ist in dem zumindest einen Teilstrom (39, 53) und in dem selben Bereich des Emtegutstranges (5) die in dem Teilstrom (39, 53) enthaltene Wassermasse und die Dichte dieses Teilstromes (39, 53) zu ermitteln.

8. Messvorrichtung zur Messung von Parametern in einer landwirtschaftlichen Arbeitsmaschine nach Anspruch 7,
**dadurch gekennzeichnet,**
**dass** der Mikrowellensensor (40) eingerichtet ist eine erntegutdichteunabhängige Ermittlung der Erntegutfeuchte oder eine emtegutfeuchtekompensierte Emtegutdichteermittlung ermöglicht.

9. Messvorrichtung zur Messung von Parametern in einer landwirtschaftlichen Arbeitsmaschine nach einem der vorhergehenden Ansprüche,
**dadurch gekennzeichnet,**
**dass** die landwirtschaftliche Arbeitsmaschine (1) als Feldhäcksler (2) ausgeführt ist, die in ihrem fronseitigen Bereich als Einzugs- und Vorpresswalzen (10, 11) ausgeführte Einzugsorgane (8) aufweist und wobei zumindest ein Einzugsorgan (8, 11) als in vertikaler Richtung verschwenkbares Kontaktelement (38) ausgebildet ist, dem eine Sensierienrichtung (33) zur Ermittlung eines Positionssignals (A) dieses Kontaktelementes (38) zugeordnet ist.

10. Messvorrichtung zur Messung von Parametern in einer landwirtschaftlichen Arbeitsmaschine nach Anspruch 9,
**dadurch gekennzeichnet,**
**dass** aus dem oder den generierten Positionssignalen (A) in einer Auswerteinheit (43) ein Gutvolumen (44) des die Einzugsorgane (8) durchlaufenden Erntegutstromes (39, 53) ermittelt wird.

11. Messvorrichtung zur Messung von Parametern in einer landwirtschaftlichen Arbeitsmaschine nach einem der vorhergehenden Ansprüche,
**dadurch gekennzeichnet,**
**dass** die landwirtschaftliche Arbeitsmaschine (1) als Feldhäcksler (2) ausgeführt ist, die in ihrem fronseitigen Bereich als Einzugs- und Vorpresswalzen (10, 11) ausgeführte Einzugsorgane (8) aufweist und wobei zumindest einem Einzugsorgan (8, 11) ein elektrische Wellen (41) generierender Sensor (42) zur Ermitttung eines Gutparametersignals (B) des die Einzugsorgane (8) durchlaufenden Erntegutstromes (39, 53) ermittelt.

12. Messvorrichtung zur Messung von Parametern in einer landwirtschaftlichen Arbeitsmaschine nach Anspruch 11,
**dadurch gekennzeichnet,**
**dass** aus dem oder den generierten Gutparametersignalen (B) in einer Auswerteinheit (43) eine Gutfeuchte (51) des die Einzugsorgane (8) durchlaufenden Erntegutstromes (39, 53) ermittelt wird.

13. Messvorrichtung zur Messung von Parametern in einer landwirtschaftlichen Arbeitsmaschine nach den Ansprüchen 9 bis 12,
**dadurch gekennzeichnet,**
**dass** die ermittelte Gutfeuchte (51) des zumindest einen Teilstromes (39, 53) bei der Ermittlung des Parameters Erntegutdurchsatz (55) des Teilstromes (39, 53) aus dem ermittelten Parameter Gutvolumen (44) des Teilstromes (39, 53) berücksichtigt wird.

14. Verwendung einer Messvorrichtung zur Messung von Parametern in einer landwirtschaftlichen Arbeitsmaschine nach Anspruch 1, wobei die landwirtschaftliche Arbeitsmaschine (1) als Mähdrescher (56) ausgeführt ist und die Messvorrichtung (54) den Parameter Emtegutgesamtdurchsatz und/oder Korndurchsatz ermittelt.

## Claims

1. A measuring apparatus (54) for measuring parameters in an agricultural working machine (1) for picking up and processing crop material, comprising a frame, a chassis, a front pick-up attachment (3, 4), at least one processing device (9, 12, 16) for processing the crop material, delivery devices 17, 19, 20) and drive devices (25, 26, 27, 28) for driving the individual machine components, **characterised in that** the measuring apparatus (54) is adapted to determine the crop material parameter crop material throughput (55) of at least one partial flow (39, 53) of the crop material flow (5) passing through the agricultural working machine (1) in crop material density-compensated fashion, and compensation of the crop material density (50) of the crop material flow (5, 39, 53) is effected by ascertaining the material volume of the at least one partial flow (39, 53) of the crop material flow (5) passing through the agricultural working machine (1) and ascertaining the material moisture content (51) of said partial flow (39, 53).

2. A measuring apparatus for measuring parameters in an agricultural working machine according to claim 1 **characterised in that** the material volume (44) of the at least one partial flow (39, 53) and the material moisture content (51) and/or the crop material density of said partial flow (39, 53) is ascertained in the same region of the crop material line (5).

3. A measuring apparatus for measuring parameters in an agricultural working machine according to one of the preceding claims **characterised in that** the material volume (44) and the material moisture content (51) of the at least one partial flow (39, 53) are ascertained by sensing devices (33, 42), the sensing regions (52) of which have the conveyor path of the at least one partial flow (39, 53) passing therethrough

4. A measuring apparatus for measuring parameters in an agricultural working machine according to claim 3 **characterised in that** the material volume (44) of the at least one partial flow (39, 53) is ascertained by contact elements (38) which scan the partial flow (39, 53) and are deflectable in dependence on the material volume (44).

5. A measuring apparatus for measuring parameters in an agricultural working machine according to claim 4 **characterised in that** the material moisture content (51) of the at least one partial flow (39, 53) is detected by means of electric waves (41) emitted by sensors (42).

6. A measuring apparatus for measuring parameters in an agricultural working machine according to claim 5 **characterised in that** the sensor (42) generating the electric waves (41) is in the form of a microwave sensor (40).

7. A measuring apparatus for measuring parameters in an agricultural working machine according to claim 6 **characterised in that** the microwave sensor (40) is adapted to ascertain in the at least one partial flow (39, 53) and in the same region of the crop material line (5) the water mass contained in the partial flow (39, 53) and the density of said partial flow (39, 53).

8. A measuring apparatus for measuring parameters in an agricultural working machine according to claim 7 **characterised in that** the microwave sensor (40) is adapted to permit crop material density-independent ascertainment of the crop material moisture content or crop material moisture content-compensated crop material density ascertainment.

9. A measuring apparatus for measuring parameters in an agricultural working machine according to one of the preceding claims **characterised in that** the agricultural working machine (1) is in the form of a forage harvester (2) which in its front region has intake members (8) in the form of intake and prepressing rollers (10, 11) and wherein at least one intake member (8, 11) is in the form of a contact element (38) which is pivotable in a vertical direction and with which there is associated a sensing device (33) for ascertaining a position signal (A) of said contact element (38).

10. A measuring apparatus for measuring parameters in an agricultural working machine according to claim 9 **characterised in that** a material volume (44) of the crop material flow (39, 53) passing through the intake member (8) is ascertained from the generated position signal or signals (A) in an evaluation unit (43).

11. A measuring apparatus for measuring parameters in an agricultural working machine according to one of the preceding claims **characterised in that** the agricultural working machine (1) is in the form of a forage harvester (2) which in its front region has intake members (8) in the form of intake and prepressing rollers (10, 11) and wherein a sensor (42) generating electric waves is associated with at least one intake member (8, 11) for ascertaining a material parameter signal (B) of the crop material flow (39, 53) passing through the intake members (8).

12. A measuring apparatus for measuring parameters in an agricultural working machine according to claim 11 **characterised in that** a material moisture content (51) of the crop material flow (39, 53) passing through the intake members (8) is ascertained from the generated material parameter signal or signals (B) in an evaluation unit (43).

13. A measuring apparatus for measuring parameters in an agricultural working machine according to claims 9 to 12 **characterised in that** the ascertained material moisture content (51) of the at least one partial flow (39, 53) is taken into account in ascertaining the parameter crop material throughput (55) of the partial flow (39, 53) from the ascertained parameter material volume (44) of the partial flow (39, 53).

14. Use of a measuring apparatus for measuring parameters in an agricultural working machine according to claim 1 wherein the agricultural working machine (1) is in the form of a combine harvester (56) and the measuring apparatus (54) ascertains the parameter total crop material throughput and/or grain throughput.

## Revendications

1. Dispositif de mesure (54) pour mesurer des paramètres dans une machine de travail agricole (1) servant à ramasser et traiter un produit de récolte, composée d'un cadre, d'un châssis, d'un outil frontal de ramassage (3, 4), d'au moins un dispositif de traitement (9, 12, 16) pour traiter le produit de récolte, de dispositifs de déchargement (17, 19, 20) et de dispositifs d'entraînement (25, 26, 27, 28) pour entraîner les différents composants de la machine, **caractérisé en ce que** le dispositif de mesure (54) est conçu pour déterminer, de manière compensée en densité de produit de récolte, le paramètre de produit de récolte « débit de produit de récolte » (55) d'au moins un flux partiel (39, 53) du flux de produit de récolte (5) qui traverse la machine de travail agricole (1), et **en ce que** la compensation de la densité de produit de récolte (50) du flux de produit de récolte (5, 39, 53) est obtenue par détermination du volume de produit dudit au moins un flux partiel (39, 53) du flux de produit de récolte (5) qui traverse la machine de travail agricole (1) et par détermination de l'humidité de produit (51) de ce flux partiel (39, 53).

2. Dispositif de mesure pour mesurer des paramètres dans une machine de travail agricole selon la revendication 1, **caractérisé en ce que** le volume de produit (44) dudit au moins un flux partiel (39, 53) et l'humidité de produit (51) et/ou la densité de produit de récolte de ce flux partiel (39, 53) sont déterminés dans la même zone du flux de produit de récolte (5).

3. Dispositif de mesure pour mesurer des paramètres dans une machine de travail agricole selon une des revendications précédentes, **caractérisé en ce que** le volume de produit (44) et l'humidité de produit (51) dudit au moins un flux partiel (39, 53) sont déterminés par des dispositifs de détection (33, 42) dont les zones de détection (52) sont traversées par le trajet de transport dudit au moins un flux partiel (39, 53).

4. Dispositif de mesure pour mesurer des paramètres dans une machine de travail agricole selon la revendication 3, **caractérisé en ce que** le volume de produit (44) dudit au moins un flux partiel (39, 53) est déterminé par des éléments de contact (38) qui palpent le flux partiel (39, 53) et qui peuvent être déviés en fonction du volume de produit (44).

5. Dispositif de mesure pour mesurer des paramètres dans une machine de travail agricole selon la revendication 3, **caractérisé en ce que** l'humidité de produit (51) dudit au moins un flux partiel (39, 53) est détectée au moyen d'ondes électriques (41) émises par des capteurs (42).

6. Dispositif de mesure pour mesurer des paramètres dans une machine de travail agricole selon la revendication 5, **caractérisé en ce que** le capteur (42) qui génère les ondes électriques (41) est réalisé sous la forme d'un capteur hyperfréquence (40).

7. Dispositif de mesure pour mesurer des paramètres dans une machine de travail agricole selon la revendication 6, **caractérisé en ce que** le capteur hyperfréquence (40) est conçu pour déterminer, dans ledit au moins un flux partiel (39, 53) et dans la même zone du flux de produit de récolte (5), la masse d'eau contenue dans le flux partiel (39, 53) et la densité de ce flux partiel (39, 53).

8. Dispositif de mesure pour mesurer des paramètres dans une machine de travail agricole selon la revendication 7, **caractérisé en ce que** le capteur hyperfréquence (40) est conçu pour permettre une détermination de l'humidité du produit de récolte indépendante de la densité du produit de récolte ou une détermination de la densité du produit de récolte compensée en humidité du produit de récolte.

9. Dispositif de mesure pour mesurer des paramètres dans une machine de travail agricole selon une des revendications précédentes, **caractérisé en ce que** la machine de travail agricole (1) est réalisée sous la forme d'une ensileuse (2) qui comporte dans sa partie avant des organes d'alimentation (8) réalisés sous la forme de rouleaux d'alimentation et de précompression (10, 11) et dans laquelle au moins un organe d'alimentation (8, 11) est réalisé sous la forme d'un élément de contact (38) pivotant en direction verticale, auquel est associé un dispositif de détection (33) pour déterminer un signal de position (A) de cet élément de contact (38).

10. Dispositif de mesure pour mesurer des paramètres dans une machine de travail agricole selon la revendication 9, **caractérisé en ce qu'**un volume de produit (44) du flux de produit de récolte (39, 53) passant par les organes d'alimentation (8) est déterminé dans une unité d'évaluation (43) à partir du ou des signaux de position (A) générés.

11. Dispositif de mesure pour mesurer des paramètres dans une machine de travail agricole selon une des revendications précédentes, **caractérisé en ce que** la machine de travail agricole (1) est réalisée sous la forme d'une ensileuse (2) qui comporte, dans sa partie avant, des organes d'alimentation (8) réalisés sous la forme de rouleaux d'alimentation et de précompression (10, 11) et dans laquelle un capteur (42) générant des ondes électriques (41) pour déterminer un signal de paramètre de produit (B) du flux de produit de récolte (39, 53) passant par les organes d'alimentation (8) est associé à au moins un organe d'alimentation (8, 11).

12. Dispositif de mesure pour mesurer des paramètres dans une machine de travail agricole selon la revendication 11, **caractérisé en ce qu'**une humidité de produit (51) du flux de produit de récolte (39, 53) passant par les organes d'alimentation (8) est déterminée dans une unité d'évaluation (43) à partir du ou des signaux de paramètre de produit (B) générés.

13. Dispositif de mesure pour mesurer des paramètres dans une machine de travail agricole selon les revendications 9 à 12, **caractérisé en ce que** l'humidité de produit (51) déterminée dudit au moins un flux partiel (39, 53) est prise en compte dans la détermination du paramètre « débit de produit de récolte » (55) du flux partiel (39, 53) à partir du paramètre « volume de produit » (44) déterminé du flux partiel (39, 53).

14. Utilisation d'un dispositif de mesure pour mesurer des paramètres dans une machine de travail agricole selon la revendication 1, la machine de travail agricole (1) étant réalisée sous la forme d'une moissonneuse-batteuse (56) et le dispositif de mesure (54) déterminant le paramètre « débit total de produit de récolte » et/ou « débit de grains ».
